# EUROPÄISCHE PATENTSCHRIFT

(11) **EP 4 415 854 B1**
(45) Veröffentlichungstag und Bekanntmachung des Hinweises auf die Patenterteilung: **16.09.2026**
(21) Anmeldenummer: 22800269.7
(22) Anmeldetag: 10.10.2022
(51) Int. Cl.: B01D 46/10, B01D 46/52, B01D 46/62

(54) **FILTERELEMENT UND FILTERSYSTEM**
FILTER ELEMENT AND FILTER SYSTEM
ÉLÉMENT FILTRANT ET SYSTÈME DE FILTRATION

(30) Priorität: 15.10.2021 DE 102021126855
(43) Veröffentlichungstag der Anmeldung: 21.08.2024
(73) Patentinhaber: MANN+HUMMEL GmbH, 71636 Ludwigsburg (DE)
(72) Erfinder: HETTKAMP, Philipp, 71711 Steinheim (DE); WAGNER, Markus, 94424 Arnstorf (DE); KAUFMANN, Michael, 67149 Meckenheim (DE)
(74) Vertreter: Mann + Hummel Intellectual Property
(86) Internationale Anmeldenummer: PCT/EP2022/078105
(87) Internationale Veröffentlichungsnummer: WO 2023/061943

(56) Entgegenhaltungen:
- WO-A1-2020/244888
- DE-A1- 102009 040 202
- US-A1- 2018 207 566

## Beschreibung

### Technisches Gebiet

Die Erfindung betrifft ein Filterelement zum Filtern eines Fluids, insbesondere zur Verwendung als Luftfilter einer Brennkraftmaschine oder als Innenraumluftfilter, insbesondere eines Kraftfahrzeugs sowie ein Filtersystem mit einem Filterelement.

### Stand der Technik

DE 10 2009 040 202 A1 offenbart ein Filter, umfassend ein ziehharmonikaartig gefaltetes Filtermedium, welches eine Rohseite von einer Reinseite trennt und abwechselnd Faltenspitzen und Faltengründe aufweist. In den Faltenzwischenräumen sind Klebstoffspuren angeordnet, welche sich alternierend zwischen Faltenspitzen und Faltengründen erstrecken, wobei sowohl auf der Rohseite als auch auf der Reinseite des Filtermediums jeweils mindestens zwei Klebstoffspuren zueinander parallel und senkrecht zu der Richtung der Faltenspitzen auf dem Filterelement angeordnet sind. Die Klebstoffspuren auf der Rohseite und/oder der Reinseite sind in regelmäßigen Abständen unterbrochen, wobei die Anfangs- und Endpunkte der Unterbrechungen der Klebstoffspuren an einer Mehrzahl von Geraden ausgerichtet sind, welche zueinander parallel verlaufen und mit den Faltenspitzen einen Winkel von 10-80°, bevorzugt 45+/-15° bilden.

WO 2020/244888 A1 offenbart ein Filterelement zum Filtern eines Fluids, insbesondere Luft, mit wenigstens einem Filterbalg mit einem zickzackförmig gefalteten Filtermedium, mit einer rohseitigen Anströmfläche und einer reinseitigen Abströmfläche, wobei der Filterbalg in einem Verstärkungsrahmen angeordnet ist, mit wenigstens einer Dichtung, wobei auf der Anströmfläche und/oder auf der Abströmfläche des Filterbalgs eine Mehrzahl von länglichen Klebstoffabschnitten entlang von mindestens zwei Klebstoffspuren auf dem Filtermedium angeordnet sind. Das Filterelement zugentlastende Mittel zur Kompensation einer Längenänderung der Klebstoffspuren gegenüber dem Filtermedium und/oder der Dichtung auf. Ferner wird ein Filtersystem mit einem derartigen Filterelement offenbart.

US 2018/207566 A1 offenbart einen Luftfilter, welcher ein Rahmenteil und ein tief gefaltetes Medienpaket umfasst, das im Rahmenteil des Luftfilters positioniert ist. Das Rahmenteil umfasst eine Dichtung, die um den Umfang des Rahmenteils herum positioniert ist. Der Luftfilter ist so konfiguriert, dass Luft von einem Ende eintreten und durch das Filtermedium zu einem zweiten Ende strömen kann, wobei Partikel aus dem Luftstrom entfernt werden.

### Offenbarung der Erfindung

Eine Aufgabe der Erfindung ist es, ein verbessertes Filterelement zum Filtern eines Fluids zu schaffen, das eine hohe Standzeit bei hoher Zuverlässigkeit im Betrieb aufweist.

Eine weitere Aufgabe ist es, ein Filtersystem zum Filtern eines Fluids zur Aufnahme eines solchen austauschbaren Filterelements zu schaffen.

Die vorgenannte Aufgabe wird nach einem Aspekt der Erfindung gelöst von einem Filterelement zum Filtern eines Fluids, insbesondere Luft, mit wenigstens einem Filterbalg mit einem zickzackförmig gefalteten Filtermedium, mit einer rohseitigen Eintrittsfläche und einer reinseitigen Austrittsfläche, wobei der Filterbalg in einem Verstärkungsrahmen angeordnet ist, mit wenigstens einer Dichtung, welche umfangsmäßig wenigstens teilweise zusammenhängend wenigstens abschnittsweise an einer äußeren Umfangsseite des Filtermediums auf der Eintrittsfläche oder auf der Austrittsfläche des Filterbalgs angeordnet ist, insbesondere durch Anschäumen oder Anspritzen mit dem Verstärkungsrahmen verbunden ist, wobei auf einer Anströmseite und auf einer Abströmseite von Falten des Filterbalgs eine Mehrzahl von länglichen Klebstoffabschnitten entlang einer Abrollung der Falten des Filtermediums in mindestens zwei Klebstoffspuren angeordnet sind, wobei Klebstoffspuren auf der Anströmseite und Klebstoffspuren auf der Abströmseite in einer Querrichtung versetzt gegeneinander angeordnet sind, wobei Klebstoffspuren wenigstens bereichsweise zur Kompensation einer Längenänderung der Klebstoffspuren gegenüber dem Filtermedium und/oder der Dichtung zugentlastend ausgebildet sind.

Die weitere Aufgabe wird nach einem weiteren Aspekt der Erfindung gelöst von einem Filtersystem zum Filtern eines Fluids mit einem Filtergehäuse, welches wenigstens einen Einlass zum Einströmen des Fluidstroms und wenigstens einen Auslass zum Ausströmen des gereinigten Fluidstroms aufweist, und mit einem in dem Filtergehäuse zwischen einer Rohseite und einer Reinseite austauschbar angeordneten Filterelement zum Filtern des Fluids, mit wenigstens einem Filterbalg mit einem zickzackförmig gefalteten Filtermedium, mit einer rohseitigen Eintrittsfläche und einer reinseitigen Austrittsfläche, welcher Filterbalg in einem reinseitig angeordneten Verstärkungsrahmen angeordnet ist, mit wenigstens einer Dichtung, welche umfangsmäßig wenigstens teilweise zusammenhängend wenigstens abschnittsweise an einer äußeren Umfangsseite des Filtermediums auf der Eintrittsfläche oder auf der Austrittsfläche des Filterbalgs angeordnet ist, insbesondere durch Anschäumen oder Anspritzen mit dem Verstärkungsrahmen verbunden ist, wobei auf einer Anströmseite und/oder auf einer Abströmseite von Falten des Filterbalgs eine Mehrzahl von länglichen Klebstoffabschnitten entlang einer Abrollung der Falten des Filtermediums in mindestens zwei Klebstoffspuren angeordnet sind, wobei Klebstoffspuren auf der Anströmseite und Klebstoffspuren auf der Abströmseite in einer Querrichtung versetzt gegeneinander angeordnet sind, wobei Klebstoffspuren wenigstens bereichsweise wenigstens auf der Abströmseite zur Kompensation einer Längenänderung der Klebstoffspuren gegenüber dem Filtermedium und/oder der Dichtung zugentlastend ausgebildet sind.

Günstige Ausgestaltungen und Vorteile der Erfindung ergeben sich aus den weiteren Ansprüchen, der Beschreibung und der Zeichnung.

Nach einem Aspekt der Erfindung wird ein Filterelement zum Filtern eines Fluids, insbesondere Luft, vorgeschlagen, mit wenigstens einem Filterbalg mit einem zickzackförmig gefalteten Filtermedium, mit einer rohseitigen Eintrittsfläche und einer reinseitigen Austrittsfläche, wobei der Filterbalg in einem Verstärkungsrahmen angeordnet ist, mit wenigstens einer Dichtung, welche umfangsmäßig wenigstens teilweise zusammenhängend wenigstens abschnittsweise an einer äußeren Umfangsseite des Filtermediums auf der Eintrittsfläche oder auf der Austrittsfläche des Filterbalgs angeordnet ist, insbesondere durch Anschäumen oder Anspritzen mit dem Verstärkungsrahmen verbunden ist. Auf einer Anströmseite und/oder auf einer Abströmseite von Falten des Filterbalgs sind eine Mehrzahl von länglichen Klebstoffabschnitten entlang einer Abrollung der Falten des Filtermediums in mindestens zwei Klebstoffspuren angeordnet. Dabei sind Klebstoffspuren auf der Anströmseite und Klebstoffspuren auf der Abströmseite in einer Querrichtung versetzt gegeneinander angeordnet, wobei Klebstoffspuren wenigstens bereichsweise wenigstens auf der Abströmseite zur Kompensation einer Längenänderung der Klebstoffspuren gegenüber dem Filtermedium und/oder der Dichtung zugentlastend ausgebildet sind.

Der Filterbalg kann beispielsweise zickzackförmig zu Falten gefaltet sein, mit parallelen, in einer Längserstreckung des Filterbalgs aufeinander folgenden Faltenspitzen, die sich jeweils zwischen gegenüberliegenden Stirnkanten des Filterbalgs erstrecken. Der auf der Rückseite der Faltenspitze liegende Teil der Falte wird als Faltengrund bezeichnet.

Die Durchströmungsrichtung ist bei einem flachen Filter beispielsweise senkrecht zur Eintrittsfläche und Austrittsfläche, die bei einem flachen Filter an gegenüberliegenden Flachseiten des Filterbalgs vorgesehen sind, gerichtet. Vorzugsweise bilden die Austrittsfläche und die Eintrittsfläche bei einem Filter mit aufgestellten Falten die Flächen, in denen jeweils die Faltenspitzen von Falten des Filtermediums liegen.

Die dem strömenden Fluid zugewandte Seite einer Falte des Filtermediums wird als Anströmseite der Falte bezeichnet, die dem strömenden Fluid abgewandte Seite der Falte wird als Abströmseite der Falte bezeichnet.

Dabei kann der Filterbalg umlaufend mit einem durchgehenden Verstärkungsrahmen umspritzt sein. Ein solcher Filterbalg ist vorteilhaft als Luftfilter, beispielsweise einer Brennkraftmaschine, einzusetzen und stellt eine kostengünstige und effiziente Lösung eines Luftfilters dar. Durch den angespritzten Rahmen lässt sich der Filterbalg einfach montieren und im Bedarfsfall auch austauschen.

Die Dichtung kann bevorzugt eine Polyurethan (PUR)-Dichtung sein, welche durch Anschäumen oder Anspritzen an den Filterbalg im Bereich des Verstärkungsrahmens hergestellt werden kann.

Vorteilhafterweise kann das Filterelement ein so genanntes Flachfilterelement sein. Bei einem Flachfilterelement im Sinne der Erfindung ist das Filtermedium nicht zu einem Hohlkörper geschlossen.

Das erfindungsgemäße Filterelement ist nicht ringförmig ausgebildet. Die Durchströmseiten liegen sich bezüglich einer Elementachse axial gegenüber. Im Unterschied dazu ist bei einem Hohlfilterelement, insbesondere einem so genannten Rundfilterelement, das Filtermedium umfangsmäßig geschlossen und umgibt einen Innenraum. Das erfindungsgemäße Filterelement kann eben oder gebogen sein. Dabei kann eine Eintrittsfläche und/oder eine Austrittsfläche des Filterbalges für das Fluid eben, gebogen oder abgestuft sein. Das Filterelement kann auch kastenförmig sein. Der Filterbalg kann etwa die Form eines Polyeders aufweisen. Vorteilhafterweise kann der Filterbalg würfelförmig, quaderförmig, pyramidal, prismatisch, keilartig oder dergleichen sein. Dabei ist es nicht erforderlich, dass alle Seiten, insbesondere Umfangsseiten, des Filterbalges eben sind. Wenigstens eine Seite des Filterbalges kann auch wenigstens zum Teil gebogen, insbesondere parabolisch, und/oder gestuft verlaufen. Gegenüberliegende Seiten können parallel verlaufen. Alternativ oder zusätzlich können sie auch schräg oder in anderer Weise nicht parallel zueinander verlaufen. Vorteilhafterweise können die Eintrittsfläche und/oder die Austrittsfläche jeweils wenigstens abschnittsweise senkrecht oder schräg zur Elementachse verlaufen.

Vorteilhafterweise können die Eintrittsfläche und die Austrittsfläche wenigstens abschnittsweise schräg zueinander und/oder wenigstens abschnittsweise parallel zueinander verlaufen. Vorteilhafterweise kann wenigstens ein Filterbalg ein zickzackartig und/ oder wellenartig geformtes Filtermedium aufweisen. Auf diese Weise kann die von dem Fluid zu durchströmende Oberfläche des Filtermediums im Verhältnis zur Raumausdehnung des Filterbalgs vergrößert werden.

Vorteilhafterweise können Faltenspitzen des Filtermediums auf den gegenüberliegenden Durchströmseiten, insbesondere auf einer Eintrittsfläche und/oder einer Austrittsfläche, parallel verlaufen.

Vorteilhafterweise kann wenigstens ein Filterbalg verhältnismäßig tiefe Falten und/oder variable Faltenhöhen aufweisen. Als Faltenhöhe wird die Ausdehnung einer Falte des gefalteten Filtermediums zwischen einer einströmseitigen Faltenspitze und einer benachbarten ausströmseitigen Faltenspitze bezeichnet. Bei tiefen Falten ist die Faltenhöhe, also die Höhe des Filterbalgs im Bereich der entsprechenden Falte, größer als eine Breite und/oder eine Länge des Filterbalgs senkrecht oder quer zur Faltenhöhe.

Das Filtermedium kann Filterpapier, Filtervlies, Meltblown, Gewebe und/oder andersartiges zur Filtrierung von Fluid, insbesondere Luft, geeignetes Filtermaterial aufweisen. Vorteilhafterweise kann das Filtermedium flexibel, insbesondere faltbar oder biegbar, sein.

Gemäß dem Stand der Technik sind üblicherweise stirnseitig angeordnete Klebstoffabschnitte als über die Eintrittsfläche oder Austrittsfläche durchgehende Klebstoffspuren auf den Faltenspitzen der Falten des Filtermediums angeordnet.

Erfindungsgemäß können Klebstoffspuren auf einer Anströmseite des Filtermediums beispielsweise um einen halben Abstand der Klebstoffspuren in Querrichtung des Filterbalgs versetzt aufgebracht sein gegenüber Klebstoffspuren auf einer Abströmseite des Filtermediums. So ist auf dem Filtermedium abwechselnd eine Klebstoffspur auf der Anströmseite und auf der Abströmseite aufgetragen. Dadurch bleibt die Gesamtmenge an aufgetragenem Leim gleich verglichen mit einem herkömmlichen Anbringen von Klebstoffspuren, die üblicherweise einander gegenüber liegend angebracht sind. Der Abstand der Klebstoffspuren in Querrichtung kann dadurch jedoch halbiert sein, was sich positiv auf die Stabilität des Filterbalgs auswirkt.

Zusätzlich können die Klebstoffspuren zugentlastende Maßnahmen zur Kompensation einer Längenänderung der Klebstoffspuren im Betrieb aufweisen, so dass bei Schrumpfen der Klebstoffspuren aufgrund von Umwelteinflüssen wie Temperaturwechsel die Klebstoffspur nicht aufreißen und eventuell den Filterbalg beschädigen kann. Dies ist besonders wichtig auf der Seite des Filterbalgs mit dem starren Kunststoffrahmen, an dem die Dichtung angeordnet ist, da der Filterbalg mit dem Rahmen fest verbunden ist und sich beim Schrumpfen der Klebstoffspur vom Rahmen lösen könnte.

Durch die zugentlastenden Maßnahmen kann vorteilhaft vermieden werden, dass die Klebstoffspuren durch Schrumpfen des Klebstoffs im Lauf der Zeit Klebstofföffnungen aufweisen, was dann zu Leckagen für das zu reinigende Fluid zwischen der Dichtung und dem Filtermedium führen kann. Der Vorteil der zugentlastenden Maßnahmen besteht darin, dass es durch das Schrumpfen des Klebstoffs nicht mehr zu relativ breiten Ablöseerscheinungen im kritischen Anbindungsbereich des Filterbalgs zur Dichtung kommt. Die Schrumpfung des Klebstoffs kann dennoch stattfinden, so dass es nicht zu entsprechenden Spannungen in diesen Bereichen kommt.

Gemäß einer vorteilhaften Ausgestaltung des Filterelements können zur Kompensation einer Längenänderung der Klebstoffspuren gegenüber dem Filtermedium und/oder der Dichtung auf jeder Klebstoffspur zugentlastend Klebstoffabschnitte und Klebstoffunterbrechungen alternierend angeordnet sein.

Auf diese Weise können die Klebstoffspuren als zugentlastende Maßnahme zur Kompensation einer Längenänderung der Klebstoffspuren im Betrieb eine Folge von kürzeren Klebstoffabschnitten und Klebstoffunterbrechungen aufweisen, so dass bei Schrumpfen der Klebstoffspuren aufgrund von Umwelteinflüssen wie Temperaturwechsel die Klebstoffspur nicht aufreißen und eventuell den Filterbalg beschädigen kann. Dies ist besonders wichtig auf der Seite des Filterbalgs mit dem starren Kunststoffrahmen, an dem die Dichtung angeordnet ist, da der Filterbalg mit dem Rahmen fest verbunden ist und sich beim Schrumpfen der Klebstoffspur vom Rahmen lösen könnte.

Als weiteren Vorteil können Luftquerströmungen im Filterbalg ermöglicht werden, was die Verstopfungsgefahr durch angelagerten Schmutz im Filterbalg reduziert.

Gemäß einer vorteilhaften Ausgestaltung des Filterelements können Klebstoffabschnitte auf der Anströmseite mit Klebstoffunterbrechungen auf der Abströmseite entlang der Abrollung der Falten alternierend, insbesondere überlappend, angeordnet sein. Dadurch kann eine vorteilhafte Flexibilität des Filterbalgs trotz Stabilisierung durch die Klebstoffspuren erhalten bleiben.

Gemäß einer vorteilhaften Ausgestaltung des Filterelements können auf der Anströmseite oder der Abströmseite jeweils Klebstoffabschnitte angeordnet sein, welche sich über eine Faltenspitze erstrecken. Alternativ oder zusätzlich können auf der Abströmseite oder der Anströmseite jeweils Klebstoffunterbrechungen angeordnet sein, welche sich über eine Faltenspitze erstrecken. Auf diese Weise können die Faltenspitzen durch die Klebstoffabschnitte auf den Faltenspitzen besonders stabilisiert und gegen mögliche Beschädigungen geschützt werden und dennoch durch die Klebstoffunterbrechungen auf der Rückseite der Faltenspitze, dem Faltengrund, ihre Flexibilität behalten.

Gemäß einer vorteilhaften Ausgestaltung des Filterelements kann bei Falten auf der Anströmseite wenigstens ein Randbereich in den Faltengründen von Klebstoffabschnitten ausgenommen sein. So können beispielsweise die ersten und letzten 5 oder/bis zehn Falten des Filterbalgs im Randbereich bzw. im Faltengrund ohne Klebstoffspuren ausgebildet sein. Dadurch kann vorteilhaft eine höhere Flexibilität des Filterbalgs gegen mögliche Schwingungsbelastungen erreicht werden.

Gemäß einer vorteilhaften Ausgestaltung des Filterelements können auf der Abströmseite Falten auf den abströmseitig von außen sichtbaren Faltenspitzen mindestens eine und bevorzugt mehrere Klebstoffunterbrechungen aufweisen, wobei mindestens eine und bevorzugt mehrere Klebstoffunterbrechungen auf abströmseitig von außen sichtbaren Faltenspitzen an den Falten angeordnet sind, in welchen auch anströmseitig Faltengründe von Klebstoffabschnitten ausgenommen sind.

Gemäß einer vorteilhaften Ausgestaltung des Filterelements können auf der Anströmseite jeweils Klebstoffabschnitte angeordnet sein, welche sich in einen Faltengrund erstrecken. Alternativ oder zusätzlich können auf der Abströmseite Klebstoffunterbrechungen angeordnet sein, welche sich in den Faltengrund erstrecken. Auf diese Weise kann der Filterbalg auf der Austrittsfläche günstig stabilisiert werden, während auf der Eintrittsseite genügend Flexibilität gegen mögliche Schwingungsbelastungen erhalten bleibt.

Gemäß einer vorteilhaften Ausgestaltung des Filterelements können auf der Abströmseite Faltenspitzen zusätzliche Klebstoffunterbrechungen aufweisen, welche so verteilt angeordnet sind, dass zusätzliche Klebstoffunterbrechungen benachbarter Klebstoffspuren bezüglich einer Querrichtung zu den Falten auf unterschiedlichen Faltenspitzen angeordnet sind. Insbesondere können sich die zusätzlichen Klebstoffunterbrechungen wenigstens über eine Falte erstrecken.

Zusätzliche, insbesondere längere, Klebstoffunterbrechungen können als weitere zugentlastende Maßnahme zur Kompensation einer Längenänderung der Klebstoffspuren im Betrieb beitragen, so dass bei Schrumpfen der Klebstoffspuren aufgrund von Umwelteinflüssen wie Temperaturwechsel die Klebstoffspur nicht aufreißen und eventuell den Filterbalg beschädigen kann. Dies ist besonders wichtig auf der Seite des Filterbalgs mit dem starren Kunststoffrahmen, an dem die Dichtung angeordnet ist, da der Filterbalg mit dem Rahmen fest verbunden ist und sich beim Schrumpfen der Klebstoffspur vom Rahmen lösen könnte

Gemäß einer vorteilhaften Ausgestaltung des Filterelements können die Klebstoffabschnitte und die Klebstoffunterbrechungen benachbarter Klebstoffspuren bezüglich einer Querrichtung zu den Falten jeweils auf einer Höhe bezüglich der Abrollung der Falten angeordnet sein. Dadurch kann eine vorteilhafte Stabilität des Filterbalgs erreicht werden. Außerdem kann so die Fertigung des Filterelements zusätzlich vereinfacht werden, wenn identische Muster und Längen der Klebstoffabschnitte und Klebstoffunterbrechungen verwendet werden.

Gemäß einer vorteilhaften Ausgestaltung des Filterelements können die Klebstoffabschnitte und die Klebstoffunterbrechungen mit gleicher Länge ausgebildet sein. Auf diese Weise kann ein guter Kompromiss zwischen Stabilität des Filterbalgs und Abwenden potentieller Risiken durch Schrumpfen der Klebstoffspuren mit dadurch ausgelöstem Ablösen des Filterbalgs vom dem Rahmen erzielt werden.

Gemäß einer vorteilhaften Ausgestaltung des Filterelements können die Klebstoffspuren parallel zueinander äquidistant angeordnet sein. Alternativ oder zusätzlich können die Klebstoffunterbrechungen über die Anströmseite und/oder über die Abströmseite gleichmäßig verteilt angeordnet sein. Dadurch kann eine möglichst gleichmäßige Stabilisierung des Filterbalgs erreicht werden.

Gemäß einer vorteilhaften Ausgestaltung des Filterelements können die Klebstoffspuren senkrecht zu den Faltenspitzen verlaufen. Dadurch kann eine möglichst gleichmäßige Stabilisierung des Filterbalgs erreicht werden.

Nach einem Aspekt der Erfindung wird ein Filtersystem zum Filtern eines Fluids vorgeschlagen mit einem Filtergehäuse, welches wenigstens einen Einlass zum Einströmen des Fluidstroms und wenigstens einen Auslass zum Ausströmen des gereinigten Fluidstroms aufweist, und mit einem in dem Filtergehäuse zwischen einer Rohseite und einer Reinseite austauschbar angeordneten Filterelement zum Filtern des Fluids, mit wenigstens einem Filterbalg mit einem zickzackförmig gefalteten Filtermedium, mit einer rohseitigen Eintrittsfläche und einer reinseitigen Austrittsfläche, welcher Filterbalg in einem reinseitig angeordneten Verstärkungsrahmen angeordnet ist, mit wenigstens einer Dichtung, welche umfangsmäßig wenigstens teilweise zusammenhängend wenigstens abschnittsweise an einer äußeren Umfangsseite des Filtermediums auf der Eintrittsfläche oder auf der Austrittsfläche des Filterbalgs angeordnet ist, insbesondere durch Anschäumen oder Anspritzen mit dem Verstärkungsrahmen verbunden ist. Auf einer Anströmseite und auf einer Abströmseite von Falten des Filterbalgs sind eine Mehrzahl von länglichen Klebstoffabschnitten entlang einer Abrollung der Falten des Filtermediums in mindestens zwei Klebstoffspuren angeordnet. Dabei sind Klebstoffspuren auf der Anströmseite und Klebstoffspuren auf der Abströmseite in einer Querrichtung versetzt gegeneinander angeordnet, wobei Klebstoffspuren wenigstens bereichsweise wenigstens auf der Abströmseite zur Kompensation einer Längenänderung der Klebstoffspuren gegenüber dem Filtermedium und/oder der Dichtung zugentlastend ausgebildet sind.

Der Filterbalg kann beispielsweise zickzackförmig zu Falten gefaltet sein, mit parallelen, in einer Längserstreckung des Filterbalgs aufeinander folgenden Faltenspitzen, die sich jeweils zwischen gegenüberliegenden Stirnkanten des Filterbalgs erstrecken. Dabei kann der Filterbalg umlaufend mit einem durchgehenden Verstärkungsrahmen umspritzt sein. Ein solcher Filterbalg ist vorteilhaft als Luftfilter, beispielsweise einer Brennkraftmaschine, einzusetzen und stellt eine kostengünstige und effiziente Lösung eines Luftfilters dar.

Durch den angespritzten Rahmen lässt sich der Filterbalg einfach montieren und im Bedarfsfall auch austauschen.

Die Dichtung kann bevorzugt eine Polyurethan (PUR)-Dichtung sein, welche durch Anschäumen oder Anspritzen an den Filterbalg im Bereich des Verstärkungsrahmens hergestellt werden kann.

Die Durchströmungsrichtung ist bei einem flachen Filter beispielsweise senkrecht zur Eintrittsfläche und Austrittsfläche, die bei einem flachen Filter an gegenüberliegenden Flachseiten des Filterbalgs vorgesehen sind, gerichtet. Vorzugsweise bilden die Austrittsfläche und die Eintrittsfläche bei einem Filter mit aufgestellten Falten die Flächen, in denen jeweils die Faltenspitzen von Falten des Filtermediums liegen.

Gemäß dem Stand der Technik sind üblicherweise stirnseitig angeordnete Klebstoffabschnitte als über die Eintrittsfläche oder Austrittsfläche durchgehende Klebstoffspuren auf den Faltenspitzen der Falten des Filtermediums angeordnet.

Vorteilhaft können Klebstoffspuren auf einer Anströmseite des Filtermediums beispielsweise um einen halben Abstand der Klebstoffspuren in Querrichtung des Filterbalgs versetzt aufgebracht sein gegenüber Klebstoffspuren auf einer Abströmseite des Filtermediums. So ist auf dem Filtermedium abwechselnd eine Klebstoffspur auf der Anströmseite und auf der Abströmseite aufgetragen. Dadurch bleibt die Gesamtmenge an aufgetragenem Leim gleich verglichen mit einem herkömmlichen Anbringen von Klebstoffspuren, die üblicherweise einander gegenüber liegend angebracht sind. Der Abstand der Klebstoffspuren in Querrichtung kann dadurch jedoch halbiert sein, was sich positiv auf die Stabilität des Filterbalgs auswirkt.

Zusätzlich können die Klebstoffspuren zugentlastende Maßnahmen zur Kompensation einer Längenänderung der Klebstoffspuren im Betrieb aufweisen, so dass bei Schrumpfen der Klebstoffspuren aufgrund von Umwelteinflüssen wie Temperaturwechsel die Klebstoffspur nicht aufreißen und eventuell den Filterbalg beschädigen kann. Dies ist besonders wichtig auf der Seite des Filterbalgs mit dem starren Kunststoffrahmen, an dem die Dichtung angeordnet ist, da der Filterbalg mit dem Rahmen fest verbunden ist und sich beim Schrumpfen der Klebstoffspur vom Rahmen lösen könnte.

Durch die zugentlastenden Maßnahmen kann vorteilhaft vermieden werden, dass die Klebstoffspuren durch Schrumpfen des Klebstoffs im Lauf der Zeit Klebstofföffnungen aufweisen, was dann zu Leckagen für das zu reinigende Fluid zwischen der Dichtung und dem Filtermedium führen kann. Der Vorteil der zugentlastenden Maßnahmen besteht darin, dass es durch das Schrumpfen des Klebstoffs nicht mehr zu relativ breiten Ablöseerscheinungen im kritischen Anbindungsbereich des Filterbalgs zur Dichtung kommt. Die Schrumpfung des Klebstoffs kann dennoch stattfinden, so dass es nicht zu entsprechenden Spannungen in diesen Bereichen kommt.

Gemäß einer vorteilhaften Ausgestaltung des Filtersystems kann in dem Filtergehäuse fluidstromaufwärts vor dem Filterelement ein Zyklonvorabscheider vorgesehen sein. Alternativ oder zusätzlich kann fluidstromabwärts nach dem Filterelement ein Sicherheitselement vorgesehen sein.

Vorteilhafterweise kann der Filter als Mehrstufenfilter, insbesondere zwei Stufen-Kompaktluftfilter, ausgestaltet sein. Vorteilhafterweise kann wenigstens ein Filterelement strömungstechnisch im Anschluss an wenigstens eine Partikelabscheideeinrichtung, insbesondere einen Zyklonvorabscheider, angeordnet sein. Die wenigstens eine Partikelabscheideeinrichtung kann Teil des Filters oder extern diesem insbesondere als Vorabscheider vorgeschaltet sein. Ein externer Vorabscheider kann außerhalb eines Motorraums angeordnet sein. Vorteilhafterweise können wenigstens eine Einlassöffnung, wenigstens ein Auslassöffnung und ggf. eine Partikelabscheideeinrichtung im Wesentlichen linear angeordnet sein. Auf diese Weise kann das Fluid dem Filter entsprechend im Wesentlichen entlang insbesondere einer Gehäuseachse des Filtergehäuses durchströmen.

Gemäß einer vorteilhaften Ausgestaltung des Filtersystems kann mittels der Dichtung des Filterelements bei bestimmungsgemäß eingebautem Filterelement die Rohseite von der Reinseite getrennt sein. Auf diese Weise kann eine zuverlässige Reinigung des einströmenden Fluids bei hoher Standzeit des Filterelements gewährleistet werden.

Gemäß einer vorteilhaften Ausgestaltung des Filtersystems kann das Filterelement als Einschubfilterelement ausgebildet sein, das quer zur Hauptströmungsachse des Fluids in das Filtergehäuse eingeführt oder einführbar ist. Dadurch ist ein zweckmäßiger Tausch des Filterelements bei erfolgter Beladung möglich. Auch kann so die Zeitdauer eines Wartungsaufenthalts mit Stillstand der Brennkraftmaschine oder des Fahrzeugs reduziert werden.

Das beschriebene Filtersystem kann vorteilhaft als Luftfilter, insbesondere als Luftfilter einer Brennkraftmaschine oder als Innenraumluftfilter, insbesondere eines Kraftfahrzeugs eingesetzt werden.

Die Erfindung kann bei Kraftfahrzeugen, Bau-/Landmaschinen, Kompressoren, Industriemotoren oder sonstigen Gerät mit Verbrennungsmotoren eingesetzt werden. Fahrzeuge im Sinne der Erfindung können Landfahrzeuge, Wasserfahrzeuge und/oder Luftfahrzeuge sein.

Vorteilhafterweise kann das Kraftfahrzeug ein Personenkraftwagen, ein Lastkraftwagen, ein Kraftrad, ein Kraftomnibus, eine Zugmaschine, ein landwirtschaftliches Fahrzeug und/ oder ein Baufahrzeug oder dergleichen sein.

Die Erfindung kann vorteilhafterweise Teil eines Luftansaugtrakts einer Brennkraftmaschine sein. Der Filter kann zur Reinigung von Verbrennungsluft dienen, welche der Brennkraftmaschine zugeführt wird. Die Erfindung ist jedoch nicht beschränkt auf einen Luftfilter eines Luftansaugtrakts einer Brennkraftmaschine eines Kraftfahrzeugs. Vielmehr kann sie auch bei andersartigen Luftsystemen von Kraftfahrzeugen oder anderen Maschinen, insbesondere Landmaschinen oder Baumaschinen, verwendet werden. Der Luftfilter kann auch außerhalb der Kraftfahrzeugtechnik, insbesondere bei Industriemotoren, eingesetzt werden.

Im Übrigen gelten die im Zusammenhang mit dem erfindungsgemäßen Filterelement, dem erfindungsgemäßen Elementrahmen, dem erfindungsgemäßen Filterbalg, dem erfindungsgemäßen Filtergehäuse und dem erfindungsgemäßen Filter und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: eine isometrische Darstellung eines Filtersystems mit montiertem Filterelement nach einem Ausführungsbeispiel der Erfindung;
- Fig. 2: eine isometrische Darstellung des Filtersystems nach Figur 1 mit Blick auf einen Einlass;
- Fig. 3: einen Längsschnitt durch das Filtersystem nach Figur 1;
- Fig. 4: eine isometrische Darstellung eines Filterelements nach einem Ausführungsbeispiel der Erfindung mit Blick auf eine Austrittsfläche;
- Fig. 5: eine isometrische Darstellung des Filterelements nach Figur 4 mit Blick auf eine Eintrittsfläche;
- Fig. 6: eine weitere isometrische Darstellung des Filterelements nach Figur 4 mit Blick auf die Austrittsfläche;
- Fig. 7: eine weitere isometrische Darstellung des Filterelements nach Figur 4 mit Blick auf die Eintrittsfläche;
- Fig. 8: eine Draufsicht auf die Austrittsfläche des Filterelements nach Figur 4 mit eingezeichneten Schnittebenen A-A, B-B, C-C, D-D, E-E, F-F;
- Fig. 9: einen Längsschnitt des Filterelements in der Schnittebene A-A nach Figur 8 mit auf einer Anströmseite der Falten angeordneten Klebstoffspuren;
- Fig. 10: einen Längsschnitt des Filterelements in der Schnittebene B-B nach Figur 8 mit auf einer Abströmseite der Falten angeordneten Klebstoffspuren;
- Fig. 11: einen Querschnitt des Filterelements in der Schnittebene D-D nach Figur 8 mit auf der Abströmseite der Falten angeordneten Klebstoffspuren;
- Fig. 12: einen Querschnitt des Filterelements in der Schnittebene C-C nach Figur 8 mit auf der Abströmseite der Falten angeordneten Klebstoffspuren;
- Fig. 13: einen Querschnitt des Filterelements in der Schnittebene F-F nach Figur 8 mit auf der Anströmseite der Falten angeordneten Klebstoffspuren;
- Fig. 14: einen Querschnitt des Filterelements in der Schnittebene E-E nach Figur 8 mit auf der Anströmseite der Falten angeordneten Klebstoffspuren; und
- Fig. 15: übereinander gelegte Querschnitte des Filterelements in den Schnittebenen D-D und F-F nach Figur 8 mit auf der Abströmseite und der Anströmseite angeordneten Klebstoffspuren.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

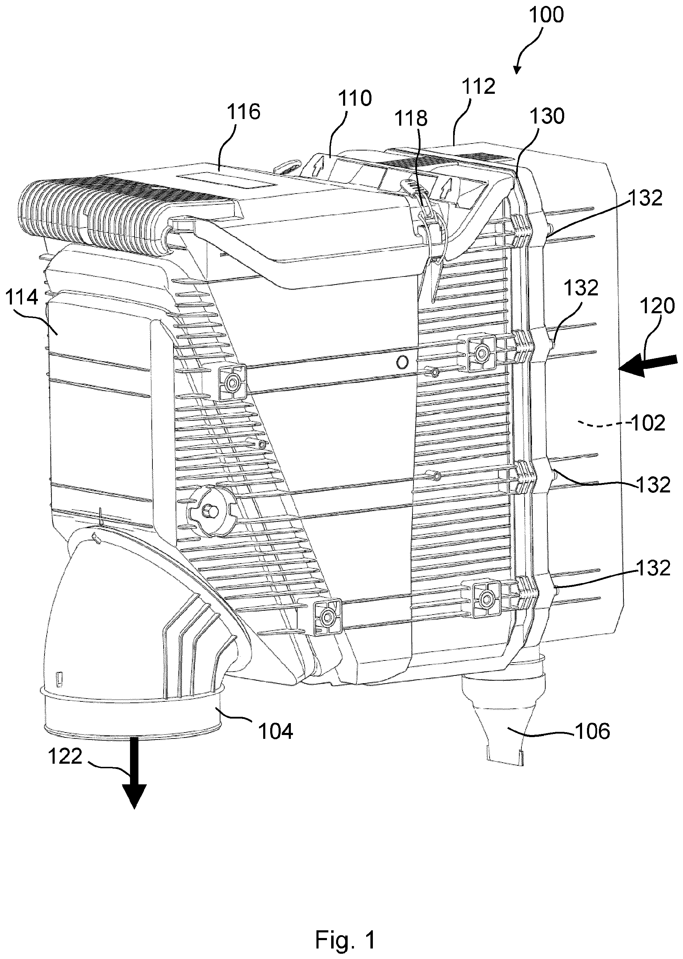

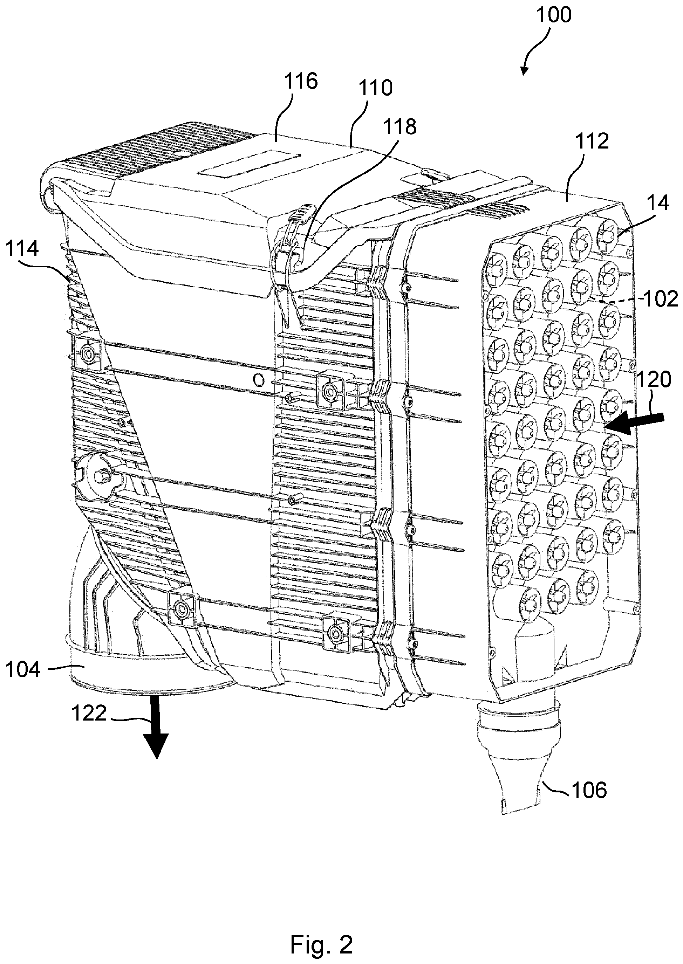

Figur 1 zeigt eine isometrische Darstellung eines Filtersystems 100 zum Filtern eines Fluids mit montiertem Filterelement 10 nach einem Ausführungsbeispiel der Erfindung, während in Figur 2 eine isometrische Darstellung des Filtersystems nach Figur 1 mit Blick auf einen Einlass 102 dargestellt ist. Figur 2 zeigt zum besseren Verständnis eine längsgeschnittene Darstellung des Filtersystems 100.

Das Filtersystem 100 weist ein Filtergehäuse 110 auf, welches wenigstens einen (nicht sichtbaren) Einlass 102 zum Einströmen des Fluidstroms 120 und wenigstens einen Auslass 104 zum Ausströmen des gereinigten Fluidstroms 122 aufweist. Das Filtergehäuse 110 umfasst ein Gehäuseunterteil 114 und ein Gehäuseoberteil 112, welche entlang eines Flansches 130 mittels Verschraubungen 132 zusammengefügt sind. In dem Filtergehäuse 110 ist zwischen einer Rohseite 40 und einer Reinseite 42 ein Filterelement 10 zum Filtern des Fluids austauschbar angeordnet. Das Filterelement 10 kann über einen Gehäusedeckel 116, welcher mittels Spannverschlüssen 118 mit dem Filtergehäuse 110 dicht verschlossen werden kann, in das Filtergehäuse 110 eingesetzt und wieder entnommen werden. Die Einströmrichtung des zu reinigenden Fluids, sowie die Ausströmrichtung sind mit Pfeilen 120, 122 angegeben.

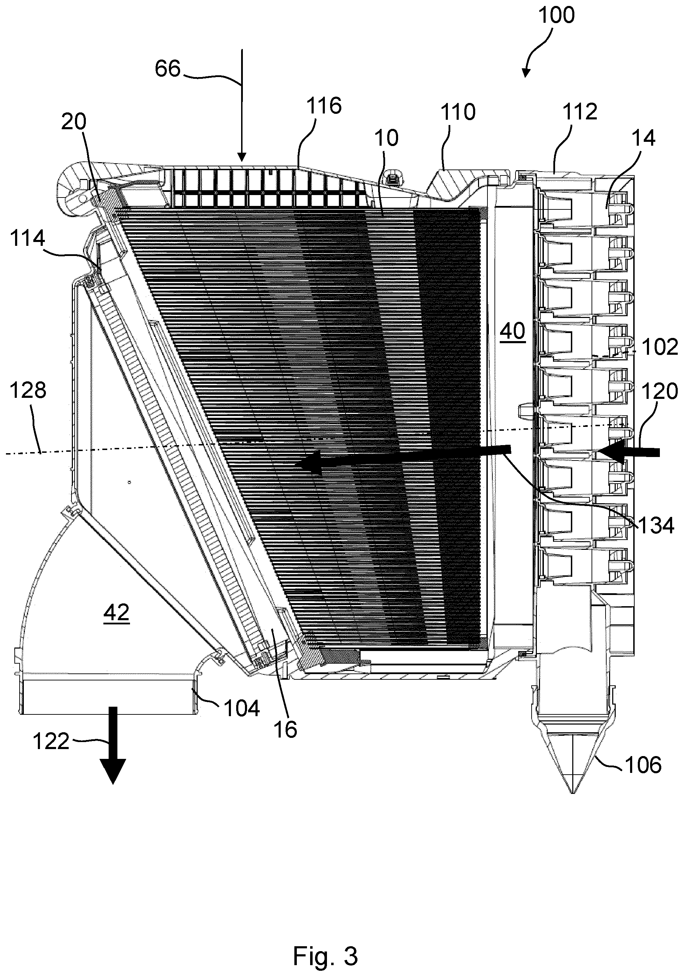

Im Längsschnitt des Filtersystems 100 in Figur 3 ist das ebenfalls geschnittene Filterelement 10 zu erkennen, welches in das Filtergehäuse 110 eingesetzt ist. Weiter ist ein als Multizyklon ausgebildeter Zyklonvorabscheider 14 zu erkennen, wo gröbere Schmutzpartikel aus dem Fluidstrom ausgefiltert werden können. Die abgeschiedenen Schmutzpartikel können über den Schmutzauslass 106 aus dem Filtergehäuse abgelassen werden. Die Durchströmungsrichtung 134 des Filterelements 10 ist mit einem Pfeil angezeigt. Stromabwärts, bevor das gereinigte Fluid das Filtergehäuse 110 über den Auslass 104 verlassen kann, durchströmt das Fluid noch ein Sicherheitselement 16, welches beispielsweise als Flachbalg ausgebildet sein kann, um auch beim Tausch des Filterelements 10 die Reinseite 42 vor einer möglichen Verschmutzung durch Einströmen nicht gereinigten Fluids oder sonstiger Schmutzpartikel zu schützen. Das Sicherheitselement 16 deckt den Auslass 104 vollständig ab.

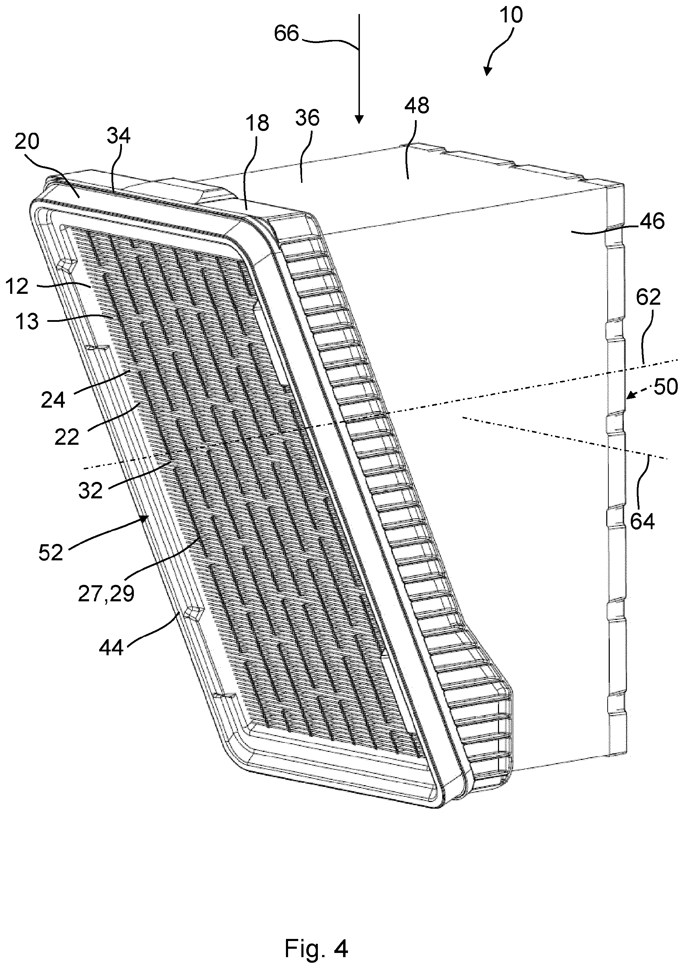

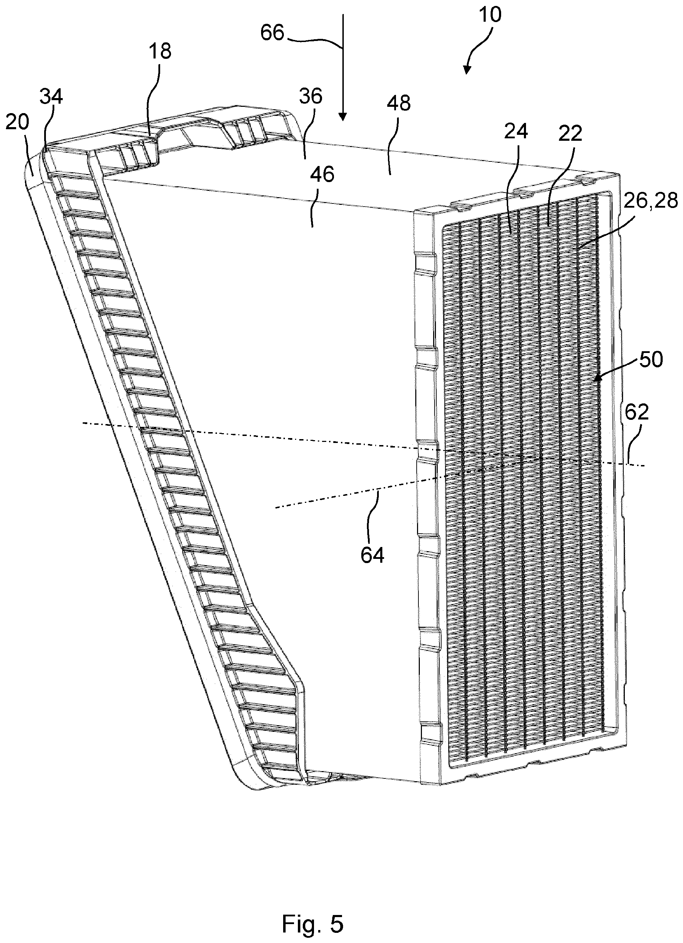

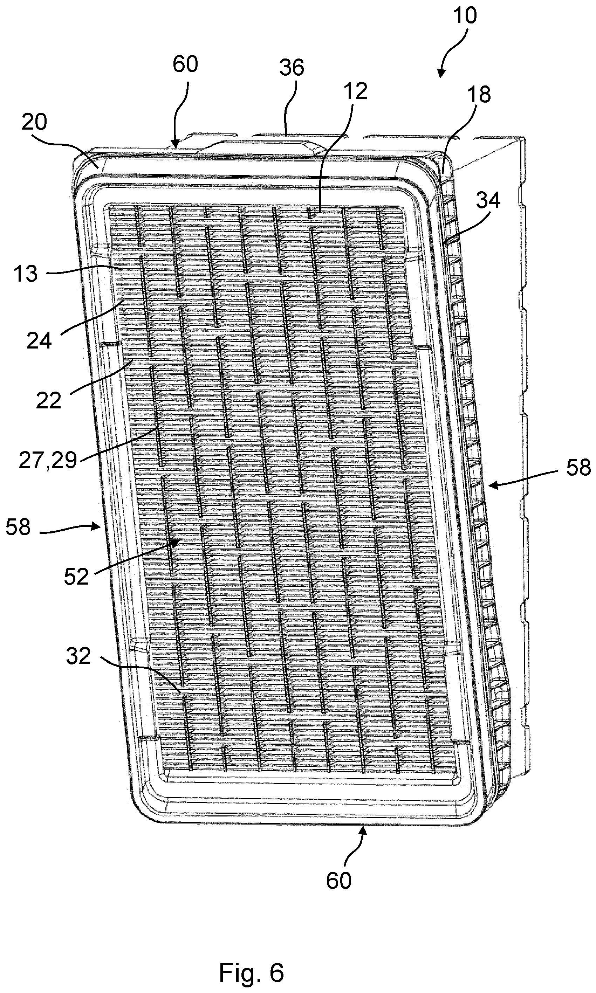

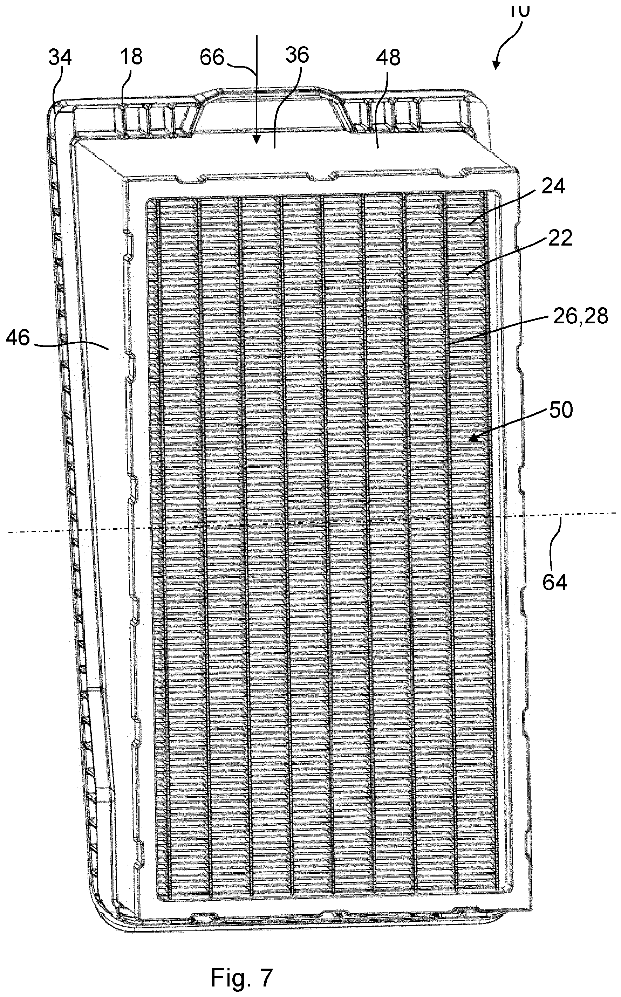

Das in dem Filtersystem 100, wie in den Figuren 1, 2 und 3 dargestellt, eingesetzte Filterelement 10 ist in Figur 4 in einer isometrischen Darstellung mit Blick auf eine Austrittsfläche 52 sowie in Figur 5 mit Blick auf eine Eintrittsseite 50 zu sehen. Figur 6 zeigt eine weitere isometrische Darstellung des Filterelements 10 nach Figur 4 mit Blick auf die Austrittsfläche 52 und Figur 7 mit Blick auf die Eintrittsfläche 50.

Das Filterelement 10 umfasst einen Filterbalg 12, welcher in einem Elementrahmen 36 eingesteckt ist.

Das Filterelement 10 ist als Einschubfilterelement ausgebildet, das quer zur Hauptströmungsachse 128 (siehe Figur 3) des Fluids in das Filtergehäuse 110 eingeführt oder einführbar ist.

Der Filterbalg 12 verfügt über ein zickzackförmig gefaltetes Filtermedium 13. Der Filterbalg 12 ist in Richtung einer Hauptachse 62 betrachtet rechteckig. In Richtung einer Querachse 64 betrachtet hat der Filterbalg 12 etwa die Form eines rechtwinkligen Trapezes. Eine rohseitige Eintrittsfläche 50 des Filterbalgs 12 verläuft parallel zu einer Durchströmmittelebene, also senkrecht zur Hauptachse 62. Eine reinseitige Austrittsfläche 52 verläuft parallel zur Querachse 64 und schräg zur Durchströmmittelebene, also schräg zur Eintrittsfläche 50.

Der Filterbalg 12 verjüngt sich in Einbaurichtung 66 betrachtet zu seiner vorderen Querseite hin. Die Faltenspitzen 24 des Filtermediums 13 an der Eintrittsfläche 50 und der Austrittsfläche 52 verlaufen jeweils parallel zur Querachse 64. Die Faltenspitzen 24 spannen jeweils die Eintrittsfläche 50 bzw. die Austrittsfläche 52 auf. Die Höhen der Falten 22 des gefalteten Filtermediums 13 in Richtung der Hauptachse 62 verkleinern sich von der bezüglich der Einbaurichtung 66 hinteren Querseite des Filterbalgs 12 zu dessen vorderer Querseite hin. Der Filterbalg 12 hat also variable Faltenhöhen.

Die Austrittsfläche 52 ist von der Dichtung 20 umgeben. Mittels der Dichtung 20 des Filterelements 10 ist bei bestimmungsgemäß eingebautem Filterelement 10 die Rohseite 40 von der Reinseite 42 des Filterelements 10 getrennt.

Die Dichtung 20 kann beispielsweise aus Polyurethan (PUR) sein. Sie ist elastisch. Die Dichtung 20 ist an der Stirnseite des Filtermediums 13 angeschäumt. Die Dichtung 20 überragt das Filtermedium 13 bezüglich der Hauptachse 62 radial außen und in axialer Richtung. Eine ausströmseitige stirnseitige Dichtlippe der Dichtung 20 bildet eine bezüglich der Hauptachse 62 umfangsmäßig zusammenhängende Dichtungsfläche 44. Die Dichtungsfläche 44 liegt im eingebauten Zustand an einer gehäuseseitigen Dichtfläche an.

Auf der der Dichtungsfläche 44 bezüglich der Hauptachse 62 axial abgewandten Rückseite der Dichtung 20 ist ein Verstärkungsrahmen 18 aus Kunststoff in die Dichtungsspur der Dichtung 20 eingebettet. Der Verstärkungsrahmen 100 erstreckt sich parallel zur Dichtebene und parallel zur Dichtungsfläche 44. Der Verstärkungsrahmen 18 ist bezüglich der Hauptachse 62 umfangsmäßig zusammenhängend. Eine der Dichtungsfläche 44 bezüglich der Hauptachse 62 axial abgewandte Dichtungsrückseite der Dichtung 20 erstreckt sich in einer Ebene parallel zur Ebene der Dichtungsfläche 44. Bei eingebautem Filterelement 14 erstrecken sich die jeweiligen Ebenen der Dichtungsfläche 44 und der Dichtungsrückseite parallel zur Dichtebene der gehäuseseitigen Dichtfläche.

Auf der Austrittsfläche 52 verfügt der Elementrahmen 36 über die Dichtungs-Abstützvorrichtung 34. Die Dichtungs-Abstützvorrichtung 34 ist am abströmseitigen Rand des Elementrahmens 36 angeordnet. Die Dichtungs-Abstützvorrichtung 34 erstreckt sich an der Außenseite des Filterelements 10 bezüglich der Hauptachse 62 umfangsmäßig zusammenhängend. Die Dichtungs-Abstützvorrichtung 34 ist einstückig mit den Längswänden 46 und den Querwänden 48 des Elementrahmens 36 verbunden.

Auf einer Anströmseite 70 und auf einer Abströmseite 72 von Falten 22 des Filterbalgs 12 sind eine Mehrzahl von länglichen Klebstoffabschnitten 28, 29 entlang einer Abrollung von Falten 22 des Filtermediums 13 in mindestens zwei Klebstoffspuren 26, 27 angeordnet. Die Klebstoffspuren 26 auf der Anströmseite 70 und die Klebstoffspuren 27 auf der Abströmseite 72 sind in der Querrichtung 64 versetzt gegeneinander angeordnet.

Die Klebstoffspuren 26, 27 verlaufen senkrecht zu den Faltenspitzen 24 der Falten 22 des Filterbalgs 12.

Die Klebstoffspuren 26, 27 sind wenigstens bereichsweise wenigstens auf der Abströmseite 72 zur Kompensation einer Längenänderung der Klebstoffspuren 26 gegenüber dem Filtermedium 13 und/oder der Dichtung 20 zugentlastend ausgebildet.

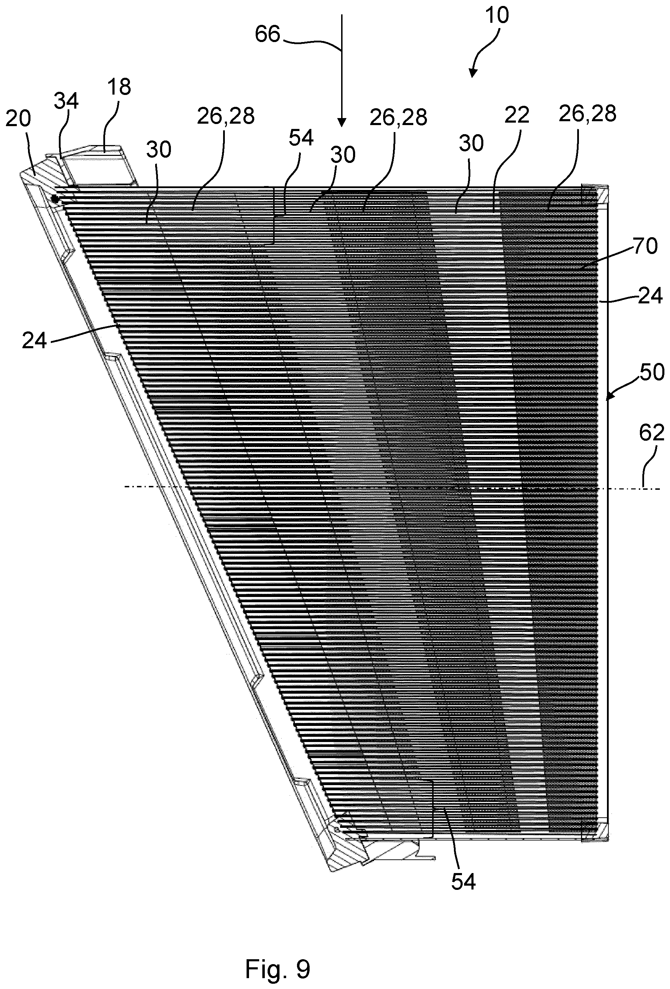

Zur Kompensation einer möglichen Längenänderung der Klebstoffspuren 26, 27 gegenüber dem Filtermedium 13 und/oder der Dichtung 20 können auf jeder Klebstoffspur 26, 27 zugentlastend Klebstoffabschnitte 28, 29 und Klebstoffunterbrechungen 30, 31 alternierend angeordnet sein. Details dazu sind in den Figuren 9 bis 15 zu erkennen.

Bei dem in Figuren 4 bis 7 dargestellten Ausführungsbeispiel des Filterelements 10 sind die eintrittsseitigen Klebstoffspuren 26 durchgehend ohne Klebstoffunterbrechungen aufgetragen, während auf der Abströmseite 52 Faltenspitzen 24 zusätzliche Klebstoffunterbrechungen 32 aufweisen. Die zusätzlichen Klebstoffunterbrechungen 32 sind dabei so verteilt angeordnet, dass zusätzliche Klebstoffunterbrechungen 32 benachbarter Klebstoffspuren 26, 27 bezüglich einer Querrichtung 64 zu den Falten 22 auf unterschiedlichen Faltenspitzen 24 angeordnet sind. Insbesondere können sich die zusätzlichen Klebstoffunterbrechungen 32 über eine oder mehrere Falten 22 erstrecken.

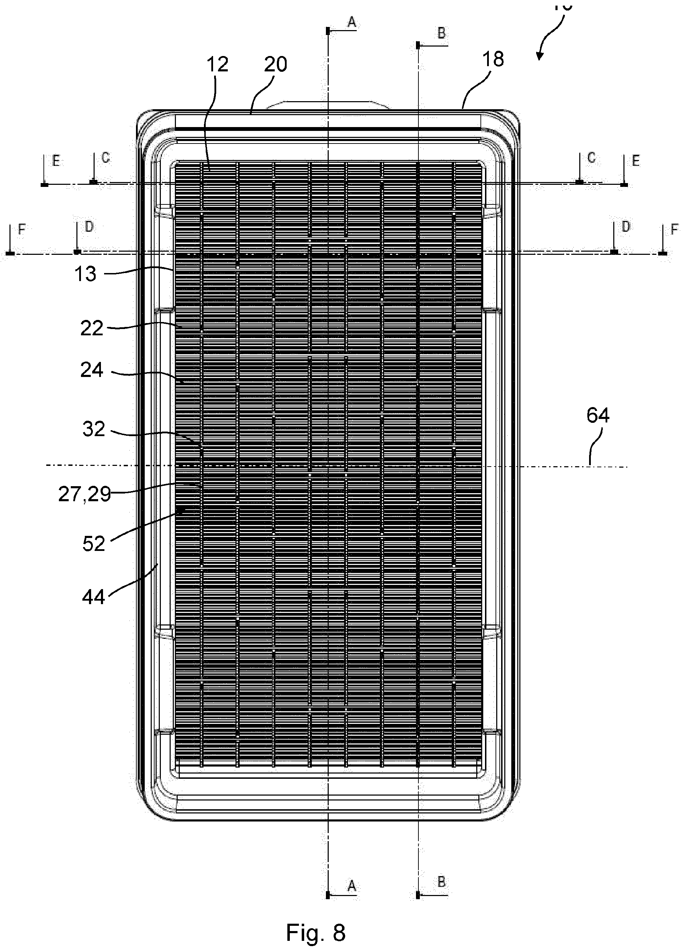

Figur 8 zeigt eine Draufsicht auf die Austrittsfläche 52 des Filterelements 10 nach Figur 4 mit eingezeichneten Schnittebenen A-A, B-B, C-C, D-D, E-E, F-F. Die Klebstoffspuren 27 verlaufen senkrecht zu den Faltenspitzen 24 und sind in der Querrichtung 64 äquidistant angeordnet. Die Klebstoffspuren 27 weisen zusätzliche Klebstoffunterbrechungen 32 auf.

Figur 9 zeigt einen Längsschnitt des Filterelements 10 in der Schnittebene A-A nach Figur 8 mit auf einer Anströmseite 70 der Falten 22 angeordneten Klebstoffspuren 26. In dem Längsschnitt des Filterelements 10 sind die Klebstoffabschnitte 26 und Klebstoffunterbrechungen 30 der Klebstoffspuren 26 angeschnitten als Streifen zu erkennen, welche über die ganze Ausdehnung des Filterbalgs 12 in Einbaurichtung 66 verlaufen.

Auf der Anströmseite 70 sind Falten 22 der Randbereiche 54 in den Faltenspitzen 24 von Klebstoffabschnitten 28, 29 ausgenommen, um eine höhere Flexibilität des Filterbalgs 12 zu erhalten.

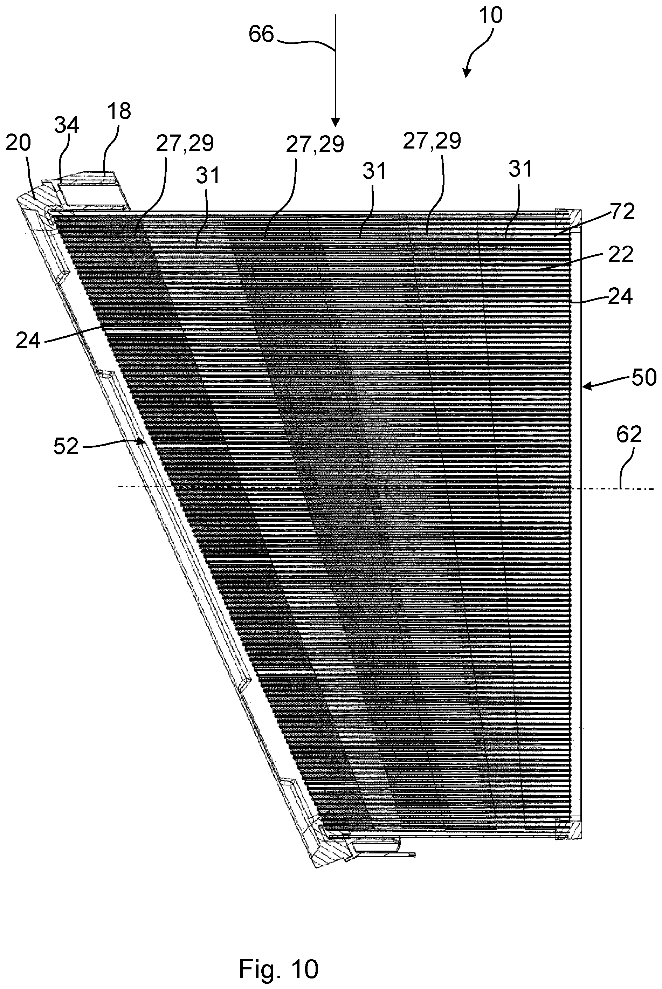

Figur 10 zeigt einen Längsschnitt des Filterelements 10 in der Schnittebene B-B nach Figur 8 mit entsprechenden Klebstoffspuren 27 auf einer Abströmseite 72.

Wie beim Vergleich der Längsschnitte in Figuren 9 und 10 zu erkennen ist, sind Klebstoffabschnitte 28, 29 auf der Anströmseite 70 mit Klebstoffunterbrechungen 30, 31 auf der Abströmseite 72 entlang der Abrollung der Falten 22 alternierend angeordnet. Optional können die Klebstoffabschnitte 28, 29 mit den Klebstoffunterbrechungen 30, 31 der jeweils gegenüber liegenden Seite 70, 72 leicht überlappend angeordnet sein.

Auf der Anströmseite 70 oder der Abströmseite 72 sind jeweils Klebstoffabschnitte 28, 29 angeordnet, welche sich über eine Faltenspitze 24 erstrecken. Alternativ oder zusätzlich können auch auf der Abströmseite 72 oder der Anströmseite 70 jeweils Klebstoffunterbrechungen 30, 31 angeordnet sein, welche sich über eine Faltenspitze 24 erstrecken. Wenn beispielsweise auf einer Seite 70, 72 die Faltenspitze 24 einen Klebstoffabschnitt 28, 29 aufweist, kann der korrespondierende Faltengrund eine Klebstoffunterbrechung 30, 31 aufweisen und umgekehrt.

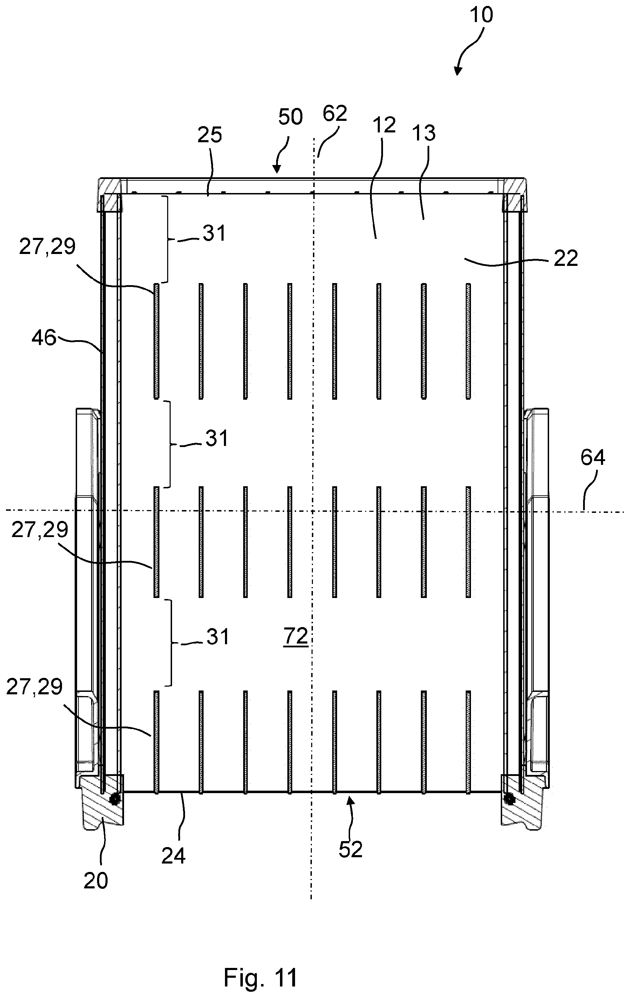

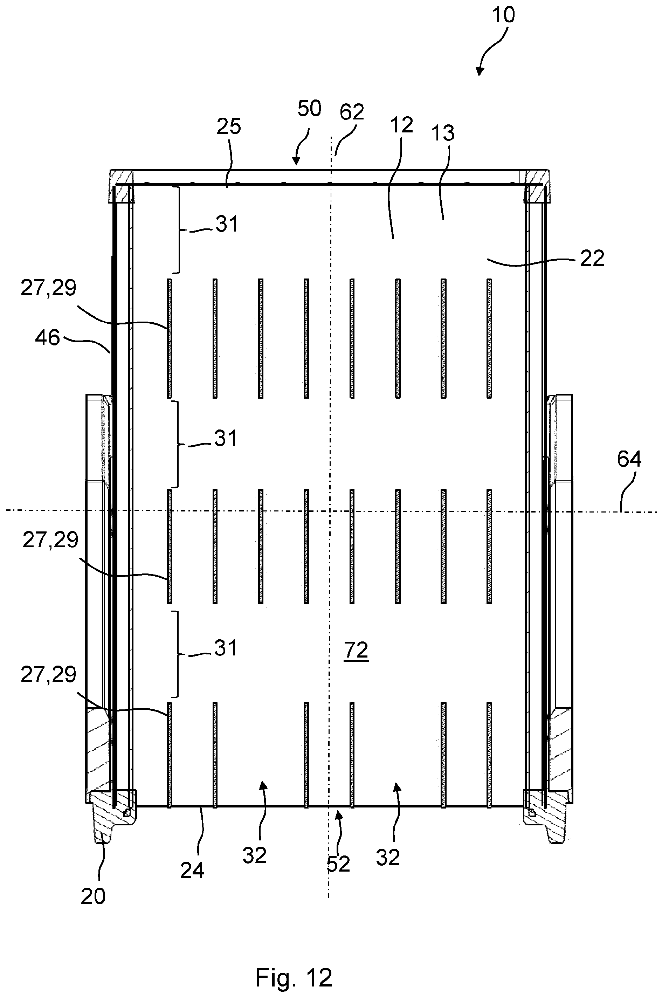

In Figur 11 ist ein Querschnitt des Filterelements 10 in der Schnittebene D-D nach Figur 8 mit auf der Abströmseite 72 angeordneten Klebstoffspuren 27 dargestellt, während in Figur 12 ein Querschnitt in der Schnittebene C-C dargestellt ist. Im Querschnitt ist die Abrollung der Falte 22 in der Bildebene als Abströmseite 72 der Falte 22 zu erkennen.

Die Klebstoffspuren 27 weisen alternierend Klebstoffabschnitte 29 und Klebstoffunterbrechungen 31 auf. Die Klebstoffspuren 27 sind parallel zueinander äquidistant angeordnet. Alternativ oder zusätzlich können die Klebstoffunterbrechungen 30, 31 über die Abströmseite 72 gleichmäßig verteilt angeordnet sein.

Wie in Figuren 11 und 12 zu erkennen ist, sind auf der Abströmseite 72 Klebstoffunterbrechungen 31 in dem Faltengrund 25 der Falten, welcher in der Darstellung an der Eintrittsfläche 50 liegt, angeordnet.

Die Klebstoffabschnitte 29 und die Klebstoffunterbrechungen 31 benachbarter Klebstoffspuren 27 sind bezüglich der Querrichtung 64 zu den Falten 22 jeweils auf einer Höhe bezüglich der Abrollung der Falten 22 angeordnet.

Die Klebstoffabschnitte 28, 29 und die Klebstoffunterbrechungen 30, 31 können beispielsweise mit gleicher Länge oder zumindest mit annähernd gleicher Länge wie bei dem in Figuren 11 und 12 dargestellten Ausführungsbeispiel ausgebildet sein.

Bei dem Querschnitt in Figur 12 sind an der Faltenspitze 24 der Austrittsfläche 52 zwei zusätzliche Klebstoffunterbrechungen 32 zu erkennen, wo die entsprechenden Klebstoffabschnitte 29 fehlen.

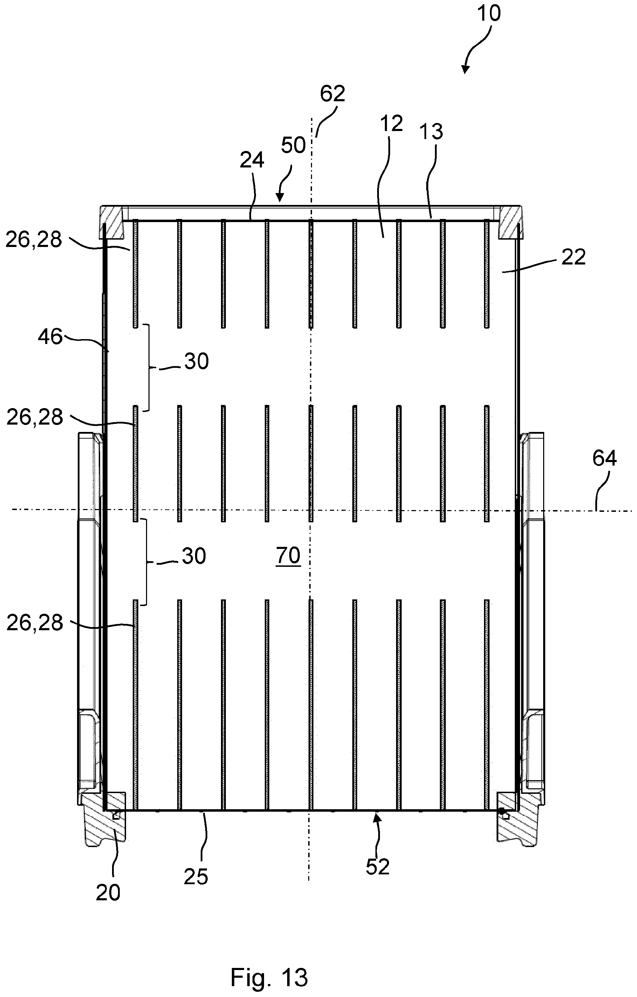

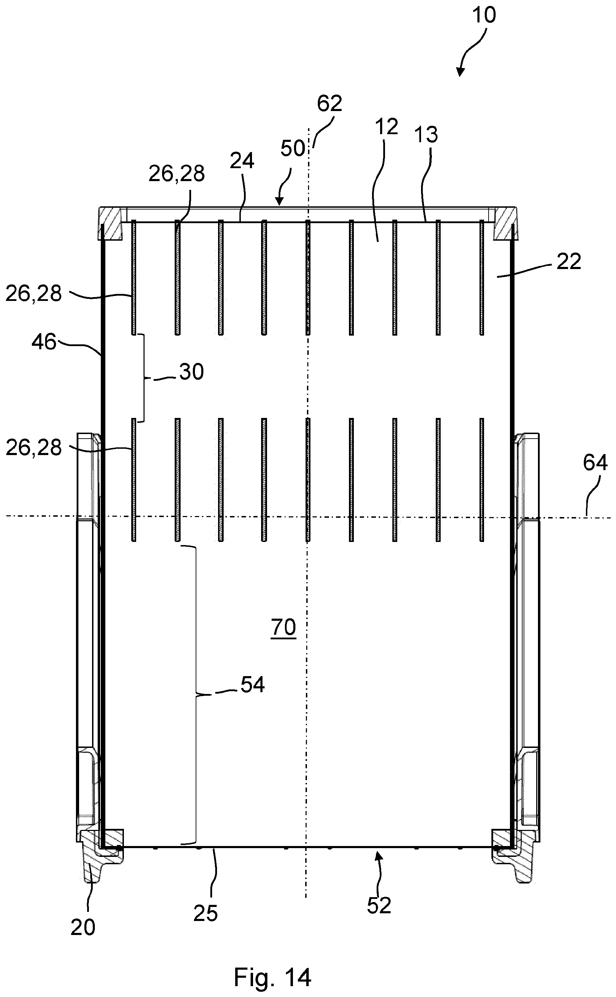

In Figur 13 ist ein Querschnitt des Filterelements 10 in der Schnittebene F-F nach Figur 8 mit auf der Anströmseite 70 angeordneten Klebstoffspuren 26 dargestellt, während in Figur 14 ein Querschnitt in der Schnittebene E-E nach Figur 8 dargestellt ist.

Die Klebstoffspuren 26 sind gegenüber den Klebstoffspuren 27 in den Figuren 11 und 12 in der Querrichtung 64 versetzt auf Lücke angeordnet. Klebstoffabschnitte 28 und Klebstoffunterbrechungen 30 der Anströmseite 70 sind mit den Klebstoffabschnitten 29 und Klebstoffunterbrechungen 31 der Abströmseite 72 alternierend angeordnet.

Wie in Figuren 13 und 14 zu erkennen ist, sind auf der Anströmseite (70), hier gemeint sind die anströmseitigen Innenwandungen der anströmseitigen Faltentaschen der Falten 22, jeweils Klebstoffabschnitte 28 angeordnet, welche sich in einen Faltengrund 25, welcher bei der Darstellung an der Austrittsseite 52 liegt, erstrecken. Dazu sind die Klebstoffabschnitte 28 im Faltengrund 25 länger ausgebildet als die Klebstoffabschnitte 28 auf der restlichen Fläche der Anströmseite 70 der Falte 22. Bevorzugt sind in einem im Faltengrund 25 liegenden Randbereich 54 der ersten und/oder letzten Falten 22 bzw. Faltentaschen 25 der Anströmseite 70 der Falten 22 keine Klebstoffabschnitte 28 vorgesehen, d. h. mindestens an einem Ende des Filterbalgs 12, beispielsweise in den Faltengründen 25 der ersten bzw. letzten 5 bis/oder 10 Falten, sind der Randbereich 54 bzw. die Faltengründe 25 von Klebstoffabschnitten 28 ausgenommen. Dadurch können sich die Falten bei Zugbelastung Quer zur Richtung der Faltkanten aufweiten und die Zugspannungen durch Verformung reduzieren, womit die Gefahr eines Risses reduziert wird. Vorteilhaft ist wie bei dem gezeigten Filterelement 10 vorgesehen, dass auf der Abströmseite 72 der ersten und/oder letzten Falten 22 auf den abströmseitig von außen sichtbaren Faltenspitzen 24 mindestens eine und bevorzugt mehrere Klebstoffunterbrechungen angeordnet sind. Diese Klebstoffunterbrechungen sind bevorzugt an den Falten 22 angeordnet, in welchen auch anströmseitig Faltengründe 25 von Klebstoffabschnitten ausgenommen sind. Dadurch kann in einem begrenzten Endbereich des Filterbalgs 12 im Bereich der ersten bzw. letzten Falten 22 eine gute Verformbarkeit quer zur Richtung der Faltkanten erzielt und eine Rissgefahr verringert werden.

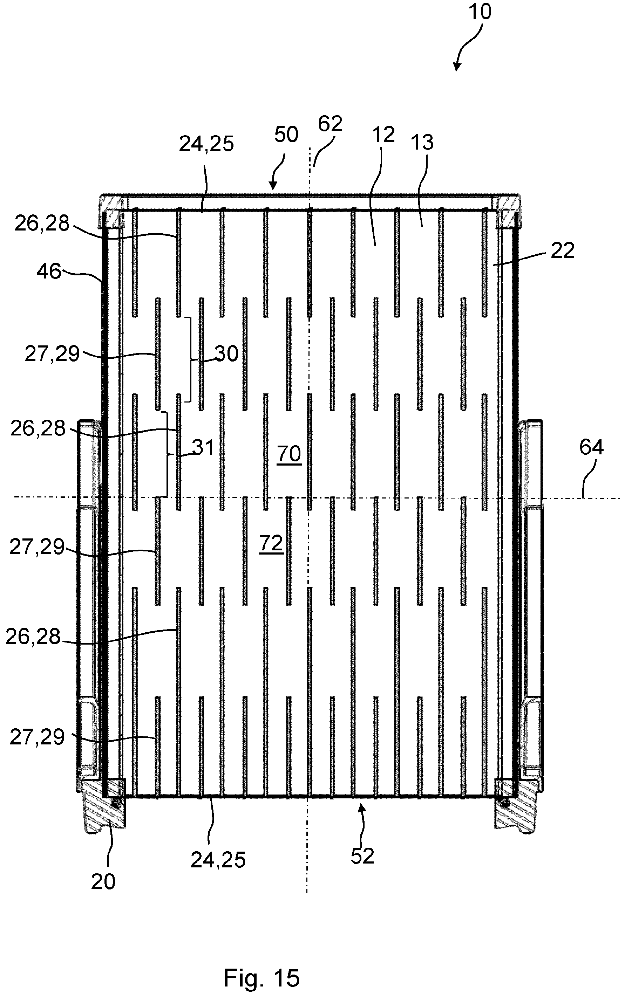

In Figur 15 sind die in Figuren 11 und 13 dargestellten Querschnitte des Filterelements 10 in den Schnittebenen D-D und F-F nach Figur 8 übereinandergelegt, so dass die versetzte Anordnung der beiden Klebstoffspuren 26, 27 auf der Anströmseite 70 und der Abströmseite 72 erkennbar wird. Auch die alternierende Anordnung der Klebstoffabschnitte 28 der Anströmseite 70 mit den Klebstoffunterbrechungen 31 der Abströmseite 72 sowie der Klebstoffabschnitte 29 der Abströmseite 72 mit den Klebstoffunterbrechungen 30 der Anströmseite 70 ist deutlich zu erkennen. Die Klebstoffabschnitte 28, 29 sind jeweils mit einer geringen Überlappung ausgebildet.

### Bezugszeichen

| | | | |
|---|---|---|---|
| 10 | Filterelement | 52 | Austrittsfläche |
| 12 | Filterbalg | 54 | Randbereich |
| 13 | Filtermedium | 58 | Längsseite |
| 14 | Zyklonvorabscheider | 60 | Querseite |
| 16 | Sicherheitselement | 62 | Hauptachse |
| 18 | Verstärkungsrahmen | 64 | Querrichtung |
| 20 | Dichtung | 66 | Einbaurichtung |
| 22 | Falte | 70 | Anströmseite |
| 24 | Faltenspitze | 72 | Abströmseite |
| 25 | Faltengrund | 100 | Filtersystem |
| 26 | Klebstoffspur | 102 | Einlass |
| 27 | Klebstoffspur | 104 | Auslass |
| 28 | Klebstoffabschnitt | 106 | Schmutzauslass |
| 29 | Klebstoffabschnitt | 110 | Filtergehäuse |
| 30 | Klebstoffunterbrechung | 112 | Gehäuseoberteil |
| 31 | Klebstoffunterbrechung | 114 | Gehäuseunterteil |
| 32 | zusätzliche Klebstoffunterbrechung | 116 | Gehäusedeckel |
| 34 | Dichtungs-Abstützvorrichtung | 118 | Spannverschluss |
| 36 | Elementrahmen | 120 | Rohfluidströmung |
| 40 | Rohseite | 122 | Reinfluidströmung |
| 42 | Reinseite | 128 | Hauptströmungsachse |
| 44 | Dichtungsfläche | 130 | Flansch |
| 46 | Längswand | 132 | Verschraubung |
| 48 | Querwand | 134 | Durchströmungsrichtung |
| 50 | Eintrittsfläche | | |

## Patentansprüche

1. Filterelement (10) zum Filtern eines Fluids, insbesondere Luft, mit wenigstens einem Filterbalg (12) mit einem zickzackförmig gefalteten Filtermedium (13), mit einer rohseitigen Eintrittsfläche (50) und einer reinseitigen Austrittsfläche (52), wobei der Filterbalg (12) in einem Verstärkungsrahmen (18) angeordnet ist,
mit wenigstens einer Dichtung (20), welche umfangsmäßig wenigstens teilweise zusammenhängend wenigstens abschnittsweise an einer äußeren Umfangsseite des Filtermediums (13) auf der Eintrittsfläche (50) oder auf der Austrittsfläche (52) des Filterbalgs (12) angeordnet ist, insbesondere durch Anschäumen oder Anspritzen mit dem Verstärkungsrahmen (18) verbunden ist,
**dadurch gekennzeichnet, dass** auf einer Anströmseite (70) und auf einer Abströmseite (72) von Falten (22) des Filterbalgs (12) eine Mehrzahl von länglichen Klebstoffabschnitten (28, 29) entlang einer Abrollung der Falten (22) des Filtermediums (13) in mindestens zwei Klebstoffspuren (26, 27) angeordnet sind, wobei Klebstoffspuren (26) auf der Anströmseite (70) und Klebstoffspuren (27) auf der Abströmseite (72) in einer Querrichtung (64) versetzt gegeneinander angeordnet sind,
wobei Klebstoffspuren (26, 27) wenigstens bereichsweise wenigstens auf der Abströmseite (72) zur Kompensation einer Längenänderung der Klebstoffspuren (26) gegenüber dem Filtermedium (13) und/oder der Dichtung (20) zugentlastend ausgebildet sind.

2. Filterelement nach Anspruch 1, wobei zur Kompensation einer Längenänderung der Klebstoffspuren (26, 27) gegenüber dem Filtermedium (13) und/oder der Dichtung (20) auf jeder Klebstoffspur (26, 27) zugentlastend Klebstoffabschnitte (28, 29) und Klebstoffunterbrechungen (30, 31) alternierend angeordnet sind.

3. Filterelement nach Anspruch 2, wobei Klebstoffabschnitte (28, 29) auf der Anströmseite (70) mit Klebstoffunterbrechungen (30, 31) auf der Abströmseite (72) entlang der Abrollung der Falten (22) alternierend, insbesondere überlappend, angeordnet sind.

4. Filterelement nach Anspruch 2 oder 3, wobei auf der Anströmseite (70) oder der Abströmseite (72) jeweils Klebstoffabschnitte (28, 29) angeordnet sind, welche sich über eine Faltenspitze (24) erstrecken und/oder wobei auf der Abströmseite (72) oder der Anströmseite (70) jeweils Klebstoffunterbrechungen (30, 31) angeordnet sind, welche sich über eine Faltenspitze (24) erstrecken.

5. Filterelement nach einem der Ansprüche 2 bis 4, wobei bei Falten (22) auf der Anströmseite (70), insbesondere bei ersten und/oder letzten Falten (22) des Filterbalgs (12), wenigstens ein Randbereich (54) in den Faltengründen (25) von Klebstoffabschnitten (28) ausgenommen ist.

6. Filterelement nach einem der Ansprüche 2 bis 5, wobei auf Falten (22) auf den abströmseitig von außen sichtbaren Faltenspitzen (24) mindestens eine und bevorzugt mehrere Klebstoffunterbrechungen (32) angeordnet sind.

7. Filterelement nach Anspruch 6, wobei mindestens eine und bevorzugt mehrere Klebstoffunterbrechungen (32) auf abströmseitig von außen sichtbaren Faltenspitzen (24) an den Falten (22) angeordnet sind, in welchen auch anströmseitig Faltengründe (25) von Klebstoffabschnitten ausgenommen sind.

8. Filterelement nach einem der Ansprüche 2 bis 7, wobei auf der Anströmseite (70) jeweils Klebstoffabschnitte (28) angeordnet sind, welche sich in einen Faltengrund (25) erstrecken, und/oder wobei auf der Abströmseite (72) Klebstoffunterbrechungen (31) angeordnet sind, welche sich in den Faltengrund (25) erstrecken.

9. Filterelement nach einem der Ansprüche 2 bis 8, wobei auf der Abströmseite (72) Faltenspitzen (24) zusätzliche Klebstoffunterbrechungen (32) aufweisen, welche so verteilt angeordnet sind, dass zusätzliche Klebstoffunterbrechungen (32) benachbarter Klebstoffspuren (26, 27) bezüglich einer Querrichtung (64) zu den Falten (22) auf unterschiedlichen Faltenspitzen (24) angeordnet sind, insbesondere wobei sich die zusätzlichen Klebstoffunterbrechungen (32) wenigstens über eine Falte (22) erstrecken.

10. Filterelement nach einem der Ansprüche 2 bis 9, wobei die Klebstoffabschnitte (28, 29) und die Klebstoffunterbrechungen (30, 31) benachbarter Klebstoffspuren (26, 27) bezüglich einer Querrichtung (64) zu den Falten (22) jeweils auf einer Höhe bezüglich der Abrollung der Falten (22) angeordnet sind.

11. Filterelement nach einem der Ansprüche 2 bis 10, wobei die Klebstoffabschnitte (28, 29) und die Klebstoffunterbrechungen (30, 31) mit gleicher Länge ausgebildet sind.

12. Filterelement nach einem der Ansprüche 2 bis 11, wobei die Klebstoffspuren (26, 27) parallel zueinander äquidistant angeordnet sind und/oder wobei die Klebstoffunterbrechungen (30, 31) über die Anströmseite (70) und/oder über die Abströmseite (72) gleichmäßig verteilt angeordnet sind wobei optional die Klebstoffspuren (26, 27) senkrecht zu den Faltenspitzen (24) verlaufen.

13. Filtersystem (100) zum Filtern eines Fluids mit einem Filtergehäuse (110), welches wenigstens einen Einlass (102) zum Einströmen des Fluidstroms (120) und wenigstens einen Auslass (104) zum Ausströmen des gereinigten Fluidstroms (122) aufweist,
und mit einem in dem Filtergehäuse (110) zwischen einer Rohseite (40) und einer Reinseite (42) austauschbar angeordneten Filterelement (10) zum Filtern des Fluids nach einem der vorhergehenden Ansprüche.

14. Filtersystem nach Anspruch 13, wobei in dem Filtergehäuse (110) fluidstromaufwärts vor dem Filterelement (10) ein Zyklonvorabscheider (14) vorgesehen ist und/ oder wobei fluidstromabwärts nach dem Filterelement (10) ein Sicherheitselement (16) vorgesehen ist.

15. Filtersystem nach Anspruch 13 oder 14, wobei mittels der Dichtung (20) des Filterelements (10) bei bestimmungsgemäß eingebautem Filterelement (10) die Rohseite (40) von der Reinseite (42) getrennt ist, wobei optional das Filterelement (10) als Einschubfilterelement ausgebildet ist, das quer zur Hauptströmungsachse (128) des Fluids in das Filtergehäuse (110) eingeführt oder einführbar ist.

## Claims

1. A filter element (10) for filtering a fluid, in particular air, with at least one filter bellows (12) with a zigzag-shaped folded filter medium (13), with a raw side inlet surface (50) and a clean side outlet surface (52), wherein the filter bellows (12) is arranged in a reinforcement frame (18),
with at least one seal (20) which is arranged circumferentially at least partially continuously at least in sections at an outer circumferential side of the filter medium (13) at the inlet surface (50) or at the outlet surface (52) of the filter bellows (12), in particular is connected by foaming or molding to the reinforcement frame (18),
**characterized in that**, on an inflow side (70) and on an outflow side (72) of the folds (22) of the filter bellows (12), a plurality of elongated adhesive sections (28, 29) are arranged along the unwinding direction of the folds (22) of the filter medium (13) in at least two adhesive tracks (26, 27), wherein adhesive tracks (26) on the inflow side (70) and adhesive tracks (27) on the outflow side (72) are arranged offset relative to each other in a transverse direction (64),
wherein the adhesive tracks (26, 27) are designed, at least in some areas and at least on the outflow side (72), to relieve tension in order to compensate for a length change of the adhesive tracks (26) relative to the filter medium (13) and/or the seal (20).

2. The filter element according to claim 1, wherein, to compensate for a length change of the adhesive tracks (26, 27) with respect to the filter medium (13) and/or the seal (20), tension-relieving adhesive sections (28, 29) and adhesive gaps (30, 31) are arranged alternatingly on each adhesive track (26, 27).

3. The filter element according to claim 2, wherein adhesive sections (28, 29) at the inflow side (70) and adhesive gaps (30, 31) at the outflow side (72) are arranged alternatingly, in particular with overlap, along the unwinding of the folds (22).

4. The filter element according to claim 2 or 3, wherein at the inflow side (70) or at the outflow side (72) adhesive sections (28, 29) are arranged, respectively, which extend across a fold tip (24) and/or wherein at the outflow side (72) or at the inflow side (70) adhesive gaps (30, 31) are arranged, respectively, which extend across a fold tip (24).

5. The filter element according to one of the claims 2 to 4, wherein at least a rim region (54) in the fold bases (25) is exempt from adhesive sections (28) in case of folds (22) at the inflow side (70), in particular in case of first and/or last folds (22) of the filter bellows (12).

6. The filter element according to one of the claims 2 to 5, wherein at least one and preferably a plurality of adhesive gaps (32) are arranged on folds (22) at the fold tips (24) which are visible from the exterior at the outflow side.

7. The filter element according to claim 6, wherein, at the folds (22) in which also fold bases (25) at the inflow side are exempt from adhesive sections, at least one and preferably a plurality of adhesive gaps (32) are arranged at fold tips (24), visible at the outflow side from the exterior.

8. The filter element according to one of the claims 2 to 7, wherein adhesive sections (28) which extend in a fold base (25) are arranged at the inflow side (70), respectively, and/or wherein adhesive gaps (31) which extend into the fold base (25) are arranged at the outflow side (72).

9. The filter element according to one of the claims 2 to 8, wherein at the outflow side (72) fold tips (24) comprise additional adhesive gaps (32) which are arranged distributed in such a way that additional adhesive gaps (32) of neighboring adhesive tracks (26, 27) are arranged in relation to a transverse direction (64) relative to the folds (22) on different fold tips (24), in particular wherein the additional adhesive gaps (32) extend across at least one fold (22).

10. The filter element according to one of the claims 2 to 9, wherein the adhesive sections (28, 29) and the adhesive gaps (30, 31) of neighboring adhesive tracks (26, 27) are arranged in relation to a transverse direction (64) relative to the folds (22) at the same level, respectively, in relation to the unwinding of the folds (22).

11. The filter element according to one of the claims 2 to 10, wherein the adhesive sections (28, 29) and the adhesive gaps (30, 31) are embodied with the same length.

12. The filter element according to one of the claims 2 to 11, wherein the adhesive tracks (26, 27) are arranged parallel equidistantly to each other and/or wherein the adhesive gaps (30, 31) are arranged, uniformly distributed, across the inflow side (70) and/or across the outflow side (72), wherein, optionally, the adhesive tracks (26, 27) extend perpendicularly to the fold tips (24).

13. A filter system (100) for filtering a fluid with a filter housing (110) which comprises at least one inlet (102) for inflow of the fluid flow (120) and at least one outlet (104) for outflow of the purified fluid flow (122),
and with a filter element (10) for filtering the fluid, in particular according to one of the preceding claims, arranged exchangeably in the filter housing (110) between a raw side (40) and a clean side (42).

14. The filter system according to claim 13, wherein in the filter housing (110) fluidically upstream in front of the filter element (10) a cyclone preseparator (14) is provided and/or wherein fluidically downstream behind the filter element (10) a safety element (16) is provided.

15. The filter system according to claim 13 or 14, wherein by means of the seal (20) of the filter element (10), with the filter element (10) installed as intended, the raw side (40) is separated from the clean side (42), wherein, optionally, the filter element (10) is configured as an insertion filter element which is inserted or insertable into the filter housing (110) transversely to the main flow axis (128) of the fluid.

## Revendications

1. Élément de filtre (10) destiné à filtrer un fluide, notamment de l'air, ayant au moins un soufflet de filtre (12) avec un milieu filtrant (13) plié en accordéon, ayant une surface d'entrée (50) côté brut, et une surface de sortie (52) côté pur, dans lequel le soufflet de filtre (12) est disposé dans un cadre de renforcement (18).
ayant au moins un joint d'étanchéité (20), qui est disposé de manière circonférentielle au moins partiellement cohérente au moins par sections contre un côté circonférentiel extérieur du milieu filtrant (13) sur la surface d'entrée (50) ou sur la surface de sortie (52) du soufflet de filtre (12), en particulier est raccordé par moussage ou par injection au cadre de renforcement (18),
**caractérisé en ce que**, sur un côté d'entrée (70) et sur un côté de sortie (72) des plis (22) du soufflet de filtre (12), une pluralité de sections d'adhésif allongées (28, 29) sont disposés le long d'un déroulement des plis (22) du milieu filtrant (13) en au moins deux traces d'adhésif (26, 27), les traces d'adhésif (26) du côté d'entrée (70) et les traces d'adhésif (27) du côté de sortie (72) étant décalées les unes par rapport aux autres dans une direction transversale (64),
les traces d'adhésif (26, 27) étant conçues, au moins par zones et au moins du côté de sortie (72), pour compenser une variation de longueur des traces d'adhésif (26) par rapport au milieu filtrant (13) et/ou au joint d'étanchéité (20) en soulageant la traction.

2. Élément de filtre selon la revendication 1, dans lequel, pour compenser une variation de longueur des traces d'adhésif (26, 27) par rapport au milieu filtrant (13) et/ou au joint d'étanchéité (20), des sections d'adhésif (28, 29) et des interruptions d'adhésif (30, 31) sont disposées en alternance sur chaque trace d'adhésif (26, 27).

3. Élément de filtre selon la revendication 2, dans lequel des sections d'adhésif (28, 29) sur le côté d'entrée (70) sont disposées en alternance avec des interruptions d'adhésif (30, 31) sur le côté de sortie (72) le long du déroulement des plis (22), en particulier de manière à se chevaucher.

4. Élément de filtre selon la revendication 2 ou 3, dans lequel, sur le côté d'entrée (70) ou le côté de sortie (72), sont disposées respectivement des sections d'adhésif (28, 29), lesquelles s'étendent sur une pointe de pli (24), et/ou dans lequel des interruptions d'adhésif (30, 31) sont disposées respectivement sur le côté de sortie (72) ou sur le côté d'entrée (70), lesquelles s'étendent sur une pointe de pli (24).

5. Élément de filtre selon l'une quelconque des revendications 2 à 4, dans lequel, au niveau des plis (22) situés du côté d'entrée (70), en particulier au niveau des premiers et/ou derniers plis (22) du soufflet de filtre (12), au moins une zone périphérique (54) dans les creux de plis (25) est exempte de sections d'adhésif (28).

6. Élément de filtre selon l'une quelconque des revendications 2 à 5, dans lequel, sur les plis (22), au niveau des pointes de plis (24) visibles de l'extérieur du côté aval, au moins une et de préférence plusieurs interruptions d'adhésif (32) sont disposées.

7. Élément de filtre selon la revendication 6, dans lequel au moins une, et de préférence plusieurs, interruptions d'adhésif (32) sont disposées sur les pointes de plis (24) visibles de l'extérieur du côté aval des plis (22), dans lesquelles des creux de plis (25) sont également exempts de sections d'adhésif du côté d'entrée.

8. Élément de filtre selon l'une quelconque des revendications 2 à 7, dans lequel, du côté d'entrée (70), sont disposées respectivement des sections d'adhésif (28) qui s'étendent dans un creux de plis (25), et/ou dans lequel, du côté de sortie (72) sont disposées des interruptions d'adhésif (31) qui s'étendent dans le creux de plis (25).

9. Élément de filtre selon l'une quelconque des revendications 2 à 8, dans lequel, sur le côté de sortie (72), les pointes de plis (24) présentent des interruptions d'adhésif supplémentaires (32) qui sont réparties de telle sorte que les interruptions d'adhésif supplémentaires (32) des traces d'adhésif adjacentes (26, 27) soient disposées sur des pointes de plis (24) différentes par rapport à une direction transversale (64) aux plis (22), en particulier dans lequel les interruptions d'adhésif supplémentaires (32) s'étendent au moins sur un pli (22).

10. Élément de filtre selon l'une quelconque des revendications 2 à 9, dans lequel les sections d'adhésif (28, 29) et les interruptions d'adhésif (30, 31) de traces d'adhésif adjacentes (26, 27) sont disposées, par rapport à une direction transversale (64) aux plis (22), chacune à un niveau correspondant au déroulement des plis (22).

11. Élément de filtre selon l'une quelconque des revendications 2 à 10, dans lequel les sections d'adhésif (28, 29) et les interruptions d'adhésif (30, 31) sont de même longueur.

12. Élément de filtre selon l'une quelconque des revendications 2 à 11, dans lequel les traces d'adhésif (26, 27) sont disposées parallèlement les unes aux autres de manière équidistante et/ou dans lequel les interruptions d'adhésif (30, 31) sont distribuées uniformément sur le côté d'entrée (70) et/ou sur le côté de sortie (72), dans lequel les traces d'adhésif (26, 27) s'étendent, en option, perpendiculairement aux pointes de plis (24).

13. Système de filtre (100) destiné à filtrer un fluide ayant un boîtier de filtre (110) qui présente au moins une entrée (102) pour une admission du flux de fluide (120) et au moins une sortie (104) pour une évacuation du flux de fluide purifié (122),
et ayant un élément filtrant (10) disposé de manière échangeable dans le boîtier de filtre (110) entre un côté brut (40) et un côté pur (42) pour filtrer le fluide selon l'une quelconque des revendications précédentes.

14. Système de filtre selon la revendication 13, dans lequel un pré-séparateur à cyclone (14) est prévu dans le boîtier de filtre (110) en amont de l'élément de filtre (10) et/ou dans lequel un élément de sécurité (16) est prévu en aval de l'élément de filtre (10).

15. Système de filtre selon la revendication 13 ou 14, dans lequel, au moyen du joint d'étanchéité (20) de l'élément de filtre (10), lorsque celui-ci est monté conformément à son utilisation, le côté brut (40) est séparé du côté pur (42), dans lequel l'élément de filtre (10) peut être réalisé, en option, sous la forme d'un élément de filtre enfichable qui est introduit ou peut être introduit dans le boîtier de filtre (110) transversalement à l'axe d'écoulement principal (128) du fluide dans le boîtier de filtre (110).
